# EUROPEAN PATENT SPECIFICATION

(11) **EP 4 039 402 B1**
(45) Date of publication and mention of the grant of the patent: **09.08.2023**
(21) Application number: 22155090.8
(22) Date of filing: 03.02.2022
(51) Int. Cl.: B23K 26/08, B23K 26/242, B23K 26/26, B23K 26/32, B23K 26/323, F25B 40/00, F28D 7/00, B23K 26/035, F28D 21/00, B23K 101/06, B23K 101/14, B23K 103/10, B23K 103/12, B23K 103/18

(54) **A METHOD OF BONDING A CAPILLARY TUBE AND A SUCTION PIPE BY MEANS OF A FIBER LASER WELDING HEAD AND CORRESPONDING APPARATUS**
VERFAHREN ZUM VERBINDEN EINES KAPILLARROHRS UND EINES SAUGROHRS DURCH VERWENDUNG EINES FASER-LASERSCHWEISSKOPFES, UND ENTSPRECHENDE VORRICHTUNG
PROCÉDÉ DE SOUDAGE D'UN TUBE CAPILLAIRE ET D'UN TUYAU D'ASPIRATION À L'AIDE D'UNE TÊTE LASER FIBRE, ET APPAREIL CORRESPONDANT

(30) Priority: 04.02.2021 EP 21461509
(43) Date of publication of application: 10.08.2022
(73) Proprietor: "SINTUR" Sp. z o.o., 62-700 Turek (PL)
(72) Inventor: KALUZNY, Marek, 62-700 Turek (PL)
(74) Representative: Kancelaria Eupatent.pl Sp. z.o.o

(56) References cited:
- DE-A1- 10 355 604
- US-A- 4 839 496
- US-A1- 2013 269 914

## Description

### TECHNICAL FIELD

The present invention relates to a method of bonding a capillary tube and a suction pipe for a regenerative heat exchanger and to an apparatus therefor.

### BACKGROUND

In refrigeration appliances such as a refrigerator, a condenser is connected to an evaporator with the use of an expansion valve (a capillary tube), and the evaporator is connected with a refrigeration unit using a suction pipe.

The combination of these two elements can therefore be called a regenerative heat exchanger in the form of a liquid subcooler or a vapor superheater, depending on the point of view. In such exchanger, the suction pipe transports a cold vapor from the evaporator to a compressor, which is heated by the capillary tube remaining in contact with the suction pipe, wherein in the capillary tube hot liquid is transported from the condenser to the evaporator, which expands as a result of a narrowing of the pipe cross-section. This solution improves the efficiency of the entire system, because the so-called waste heat is used, which has a positive effect on the improvement of energy efficiency of the refrigeration system components.

Manufacturers of household appliances aim to reduce the production costs of their appliances by: replacing the currently used materials with cheaper ones, automating production processes and reducing the energy consumption of these processes.

Conventionally, the connection of the capillary tube and the suction pipe, is carried out by an energy-consuming and long process of longitudinal brazing with solder filler or by wrapping the capillary tube and the suction pipe with a metal foil (for example with a self-adhesive metal foil).

A US patent application US2013269914 (describing all the features of the preamble of claims 1 and 15) discloses a manufacturing method of a heat exchanger for a refrigeration cycle, comprising a capillary tube and a suction pipe having external surfaces in thermal contact with each other, the manufacturing method comprising: pressing an aluminum-made suction pipe and an aluminum-made capillary tube by a pressure jig in a state where they are attached in parallel, so as to welding the external surfaces of the suction pipe and the capillary tube together with pressure; and radiating laser beams to the portion where the external surface of the suction pipe and the external surface of the capillary tube are joined while relatively moving along the laser beams in the state where the external surfaces of the suction pipe and the capillary tube are welded together with pressure, so that the external surfaces are melted and connected together. The method uses a multimode fiber laser having a spot size of 50-600 micrometers, preferably 200 micrometers. Such a wide welding spot, made by the multimode laser, wherein the energy is uniformly distributed along the whole spot, may cause deformation of external diameter of the pipes and a risk of loss of tightness (due to overburn of the wall of the suction pipe or capillary tube). Moreover, the laser beam is inclined with respect to the pipes, which causes a risk of generating sparks and splinters, which may interfere with the laser beam, thereby causing uneven shape of weld or even disruptions in continuity of the weld, which may lead to reduced efficiency of the cooling circuit. Furthermore, such splinters may damage the rollers, which may therefore need to be frequently replaced. Moreover, the pipes are pushed towards each other by pairs of rollers, while the laser welding point is away from the rollers, therefore there is a risk that at these remote positions the pipes may be not in perfect contact with each other due to imperfect surface of the pipes. Moreover, the pipes are pressed towards each other only from the side of the laser beam (i.e. the closer pair of rollers), as the other pair of rollers is too far away to provide sufficient pressing precision.

In view of high reflectivity of the laser beam from the copper as compared to aluminum, and in view of high thermal conductivity of copper, use of multimode laser for copper welding requires high laser power, which results in extensive heating of the pipes, which leads to their deformation and further problems that need to be solved. Therefore, so far the fiber laser welding was not conceived for welding copper suction pipes and capillary tubes.

A German patent application DE10355604 discloses an apparatus for manufacturing a set of pipes, comprising rollers for pressing pipes together. The rollers are arranged in pairs, one opposite the other. Therefore, there is a need to provide an improved method for bonding the capillary tube and the suction pipe, such as to perform the bonding process in a precise manner, to result in an even bonding of the external surfaces of the suction pipe and the capillary tube.

SUMMARY The invention relates to a method for bonding a capillary tube and a suction pipe for a regenerative heat exchanger, comprising the following steps: positioning the capillary tube and the suction pipe in an alignment adjacent to each other; feeding the capillary tube positioned adjacent to the suction pipe between at least one input pair of rollers that comprises a capillary tube roller and a suction pipe roller, wherein the rollers press the capillary tube and the suction pipe towards each other; and bonding the capillary tube with the suction pipe by means of a fiber laser welding head by directing a laser beam towards a welding position wherein an outer surface of the capillary tube contacts an outer surface of the suction pipe between the positioning rollers so that the outer surfaces are melted and bonded with each other, securing the capillary tube positioned adjacent to the suction pipe between a holding roller arrangement that comprises one suction pipe roller and two positioning rollers arranged opposite the suction pipe roller at sides of the suction pipe roller, and wherein the centers of the positioning rollers are distanced from each other by no more than 150% of a diameter of the positioning roller, wherein the suction pipe roller is biased towards the positioning rollers, wherein the positioning rollers have a semicircular circumferential groove of a radius (r) corresponding to the radius (r) of the capillary tube and in which the capillary tube (10) is accommodated, and wherein the suction pipe roller is biased towards the two positioning rollers such as to press the suction pipe towards the capillary tube, and wherein the welding position of the laser beam is located in a central position between the positioning rollers. Moreover, the fiber laser welding head is a single mode laser having a spot diameter between 10 and 50 micrometers, wherein the laser beam is directed perpendicularly with respect to a surface passing through longitudinal axes of the capillary tube and the suction pipe.

Such configuration of the method steps and technical components used aims to provide a uniform weld that is limited to the outer surface of the suction pipe and the capillary tube, without impacting their internal walls. First, the use of the particular three roller arrangement, wherein the welding position is between the three rollers, provides that the capillary tube and the suction pipe are precisely pushed towards each other to provide a close contact between them at the welding position. The positioning rollers are positioned close to each other, provide possibly small distance between the three points at which the suction pipe is pressed towards the capillary tube. The suction pipe roller is biased towards the positioning rollers, such that the capillary tube maintains a substantially steady position and the suction pipe bends towards the suction pipe in case of any uneven feature at the contact between the suction pipe and the capillary tube. All these features taken in combination aim to provide contact between the suction pipe and the capillary tube at the welding position. In view of the good contact provided, a single mode fiber laser can be used (wherein the laser energy has highest concentration at the center of the welding spot) having a small spot diameter, such as to direct energy exactly at the contact point between the suction pipe and the capillary tube, in order to affect only their external surfaces and limit the risk of deformation of their cross-section. The perpendicular orientation of the laser beam reduces the risk of sparks and splitters that could hamper the laser beam and interrupt the welding line. Consequently, a smooth, well defined weld is provided between the suction pipe and the capillary tube.

Preferably, a wave length of the laser beam is equal to 1070nm.

Preferably, the suction pipe has a wall of a thickness (H) from 0.3 to 1.00 mm and the capillary tube has a wall of a thickness (h) from 0.5 to 0.8 mm.

Preferably, the radius (R) of the suction pipe is from 2.0 to 5.0 mm and the radius (r) of the capillary tube is from 0.9 to 1.6 mm.

Preferably, the laser welding head generates a laser beam having an output power from 100 to 2000 W.

Preferably, both the capillary tube and the suction pipe are made of copper or both the capillary tube and the suction pipe are made of aluminum or the capillary tube is made of copper and the suction pipe is made of aluminum or the capillary tube is made of aluminum and the suction pipe is made of copper.

Preferably, the rollers 30, 40, 51, 52 are made of steel. Steel, as a low heat conductivity material (i.e. having a lower heat conductivity than aluminum or copper) and high hardness, is more resistant to wear from the temperature of the welded elements and impact of splinters, and therefore does not need frequent replacement.

Preferably, the centers of the positioning rollers (51, 52) are distanced (d) from each other by no more than 140%, or no more than 130%, or no more than 120%, or no more than 110%, or no more than 105%, or no more than 101% of a diameter of the positioning rollers (51, 52).

Preferably, each of the positioning rollers has a diameter not larger than 40% of the diameter of the suction pipe roller.

Preferably, the distance (d) between the positioning rollers plus the diameter of the positioning roller is not larger than the diameter of the suction pipe roller.

Preferably, the capillary tube roller has a first semicircular circumferential groove of a radius (R) corresponding to the radius (R) of the suction pipe and a second semicircular circumferential groove formed at the bottom of the first groove of a radius (r) corresponding to the radius (r) of the capillary tube and a depth of twice the radius (r) of the capillary tube and wherein the suction pipe roller has a semicircular circumferential groove of a radius (R) corresponding to the radius (R) of the suction pipe.

The invention also relates to an apparatus for bonding a capillary tube and a suction pipe for a regenerative heat exchanger, comprising: an input pair of rollers that comprises a capillary tube roller and a suction pipe roller, configured to receive between them the capillary tube positioned adjacent to the suction pipe and to press the capillary tube and the suction pipe towards each other; and a fiber laser welding head configured to direct a laser beam towards a welding position to bond the capillary tube with the suction pipe when the capillary tube and the suction pipe are arranged such that the capillary tube contacts an outer surface of the suction pipe so that the outer surfaces can be melted and bonded with each other. A holding roller arrangement is configured to secure the capillary tube positioned adjacent to the suction pipe, wherein the holding roller arrangement comprises one suction pipe roller and two positioning rollers arranged opposite the suction pipe roller at sides of the suction piper roller, and wherein the centers of the positioning rollers are distanced (d) from each other by no more than 150% of a diameter of the positioning rollers, wherein the suction pipe roller is biased towards the positioning rollers, wherein the positioning rollers have a semicircular circumferential groove of a radius (r) corresponding to the radius (r) of the capillary tube and in which the capillary tube is accommodated, and wherein the suction pipe roller is biased towards the two positioning rollers such as to press the suction pipe towards the capillary tube, and wherein the welding position of the laser beam is located in a central position between the positioning rollers. The fiber laser welding head is a single mode laser having a spot diameter between 10 and 50 micrometers, wherein the laser beam is configured to be directed perpendicularly with respect to a surface passing through longitudinal axes of the capillary tube and the suction pipe.

### BRIEF DESCRIPTION OF FIGURES

Further details and features of the present invention, its nature and various advantages will become more apparent from the following detailed description of the preferred embodiments shown in a drawing, in which:
Fig. 1 shows connections of a regenerative system;
Fig. 2 shows a cross-section of a capillary tube and a suction pipe aligned with each other prior to laser welding;
Fig. 3 shows an arrangement for guiding the capillary tube and the suction pipe in a laser welding system;
Fig. 4 shows a scheme of a fiber laser welding system for bonding the capillary tube and the suction pipe, according to the invention;
Fig. 5 shows a cross-section of a capillary tube roller;
Fig. 6 shows a cross-section of a suction pipe roller;
Fig. 7 shows a side view of a positioning roller;
Fig. 8 shows a first microscopic photo through a weld of the capillary tube and the suction pipe;
Fig. 9 shows a second microscopic photo through a weld of the capillary tube and the suction pipe.

### DETAILED DESCRIPTION

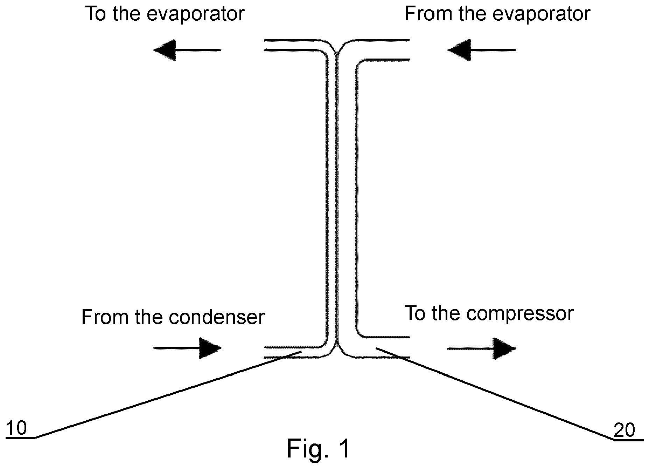

Fig. 1 shows connections of a regenerative system (a regenerative heat exchanger). In refrigeration appliances such as a refrigerator, a condenser is connected to an evaporator with the use of an expansion valve (a capillary tube 10), and the evaporator is connected with a refrigeration unit (a compressor) using a suction pipe 20. The combination of these two elements can therefore be called a regenerative exchanger in the form of a liquid subcooler or a vapor superheater, depending on the point of view. In such exchanger, the suction pipe 20 transports a cold vapor, from the evaporator to the compressor, which is heated by the capillary tube 10 that is in contact with the suction pipe 20, wherein in the capillary tube 10 the hot liquid is transported from the condenser to the evaporator, which expands as a result of a narrowing of the pipe cross-section.

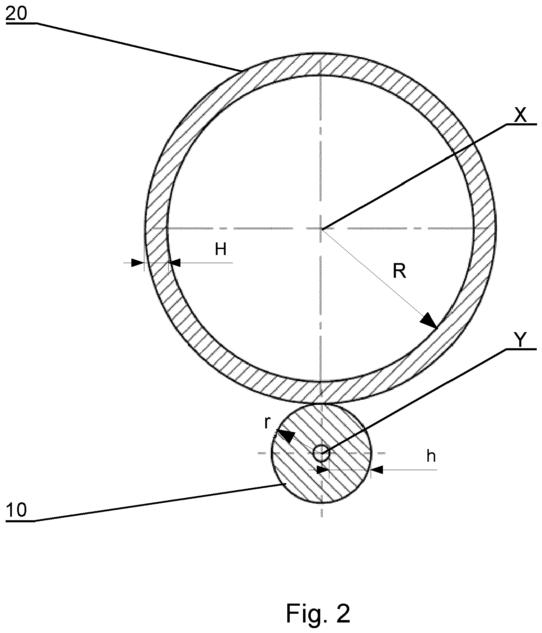

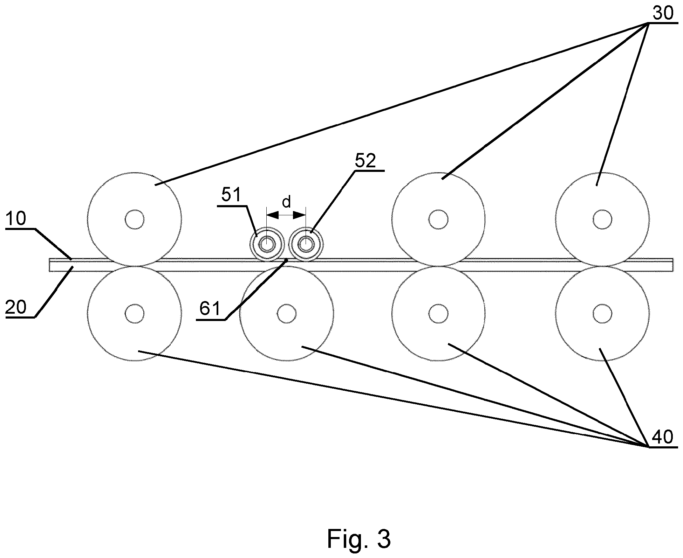

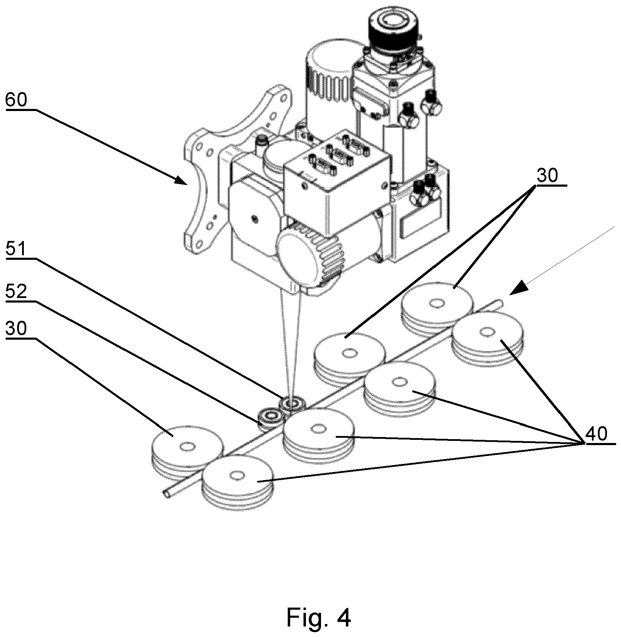

According to the present invention, the capillary tube 10 is bonded with the suction pipe 20 by means of a fiber laser welding system as schematically shown in Fig. 4, wherein the capillary tube 10 and the suction pipe 20 are pre-arranged as shown in Fig. 2 and guided by means of an arrangement of rollers as shown in Fig. 3.

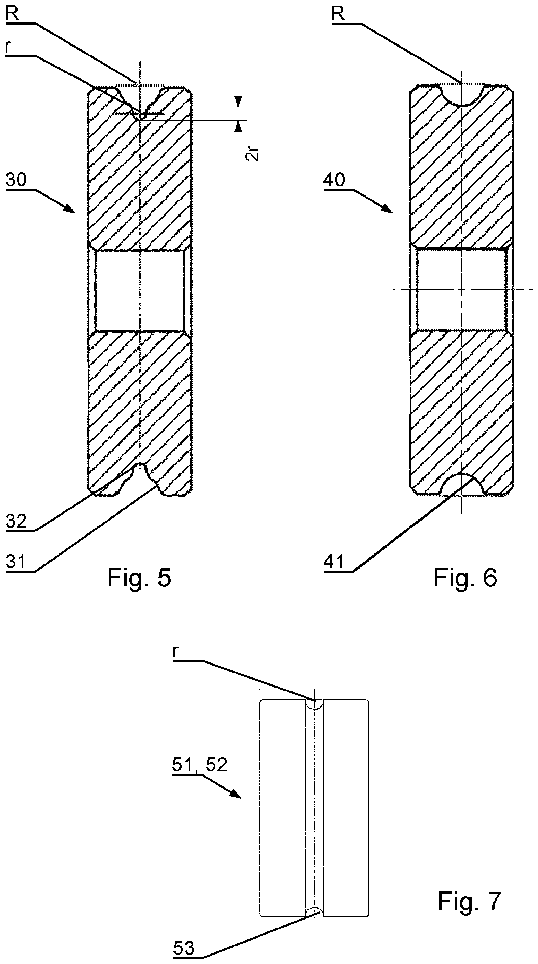

First, the capillary tube 10 and the suction pipe 20 are positioned in an alignment adjacent to each other as shown in Fig. 2. Next, while positioned adjacent to each other, they are linearly guided by means of a set of rollers 30, 40, 51, 52 towards a laser welding head 60. First, the elements 10, 20 are fed by at least one input pair of rollers that comprises a capillary tube roller 30 and a suction pipe roller 40. The capillary tube roller 30 has a first semicircular circumferential groove 31 of a radius R corresponding to the radius R of the suction pipe 20 and a second semicircular circumferential groove 32 formed at the bottom of the first groove 31 of a radius r corresponding to the radius r of the capillary tube 10 and a depth of twice the radius r of the capillary tube 10, as shown in Fig. 5. The suction pipe roller 40 has a semicircular circumferential groove 41 of a radius R corresponding to the radius R of the suction pipe 20, as shown in Fig. 6. The rollers 30, 40 are positioned such that they press the capillary tube 10 and the suction pipe 20 towards each other as they are guided between these rollers 30, 40, such that the capillary tube 10 fits into the groove 32 and the suction pipe 20 fits into the grooves 31, 41.

Along the further path, the capillary tube 10 positioned adjacent to the suction pipe 20 are secured between a holding roller arrangement that comprises one suction pipe roller 40 and two positioning rollers 51, 52 arranged opposite the suction pipe roller 40 at sides of the suction piper roller 40 (namely, a first positioning roller 51 is arranged upstream of the suction pipe roller and a second positioning roller 52 is arranged downstream of the suction piper roller). The suction pipe roller 40 has a first diameter larger than the second diameter of the two positioning rollers 51, 52 - for example, the first suction pipe roller 40 has a diameter of 60 mm, the two positioning rollers 51, 52 have a diameter of 22 mm each and are located at a distance (measured as the distance between their axes of rotation) d of 24 mm (namely, 109% of the diameter of the positioning roller) from each other. In general, the positioning rollers shall be distanced (d) by not more than 150% of their diameter - the closer they are positioned, the better. More preferable ranges for the distance (d) include not more than 140%, not more than 130%, not more than 120%, not more than 110%, not more than 105% and not more than 101% of the diameter of the positioning roller 51, 52. In addition, the positioning rollers 51, 52 shall have a diameter not larger than 40% of the diameter of the suction pipe roller 40. Most preferably, the distance (d) between the positioning rollers 51, 52 plus the diameter of a positioning roller 51, 52 shall be not larger than the diameter of the suction pipe roller 40. The positioning rollers 51, 52 have a semicircular circumferential groove 53 of a radius r corresponding to the radius r of the capillary tube 10, as shown in Fig. 6. The rollers 40, 51, 52 press the capillary tube 10 and the suction pipe 20 towards each other such that half of cross-section of the suction pipe 20 fits into the groove 41 and half of cross-section of the capillary tube 10 fits into the grooves 53. It is the suction pipe roller 40 that biases the suction pipe 20 towards the capillary tube 10, therefore in case there are any uneven features at the surface that require one of the elements to be bent, it is the suction pipe 20 that is bent towards the capillary tube 10. Thereby, the connection between the surfaces of the capillary tube 10 and the suction pipe 20 is exposed between the positioning rollers 51, 52. At this exposed area, the capillary tube 10 is bonded with the suction pipe 20 by means of a fiber laser welding head 60 by directing a laser beam towards a welding spot 61 where an outer surface of the capillary tube 10 contacts an outer surface of the suction pipe 20 between the positioning rollers 51, 52 so that the outer surfaces are melted and bonded with each other.

Finally, the bonded elements 10, 20 can be further guided by an output pair of rollers that comprises a capillary tube roller 30 and a suction pipe roller 40, similar to the input pair of rollers.

The laser beam is directed perpendicularly with respect to the surface passing through the longitudinal axis Y, X of the capillary tube 10 and the suction pipe 20 respectively.

Fig. 2 shows a cross-section of a capillary tube and a suction pipe aligned with each other prior to laser welding. The process is particularly applicable to suction pipes 20 of a radius R from 2.0 to 5.0 mm and having a wall thickness H from 0.3 to 1.00 mm and to capillary tubes 10 having a radius r from 0.9 to 1.6 mm and a wall thickness h from 0.5 to 0.8 mm.

For such elements, a single mode fiber laser beam is used (having highest beam energy at the center of the spot), wherein a spot diameter of the laser beam is equal from 10 to 50 µm, preferably 20 to 40 µm, for example 28 µm, with a laser wave length equal to 1070 nm. A laser head may generate a laser beam having an output power from 100 to 2000 W.

Both the capillary tube 10 and the suction pipe 20 can be made of copper or both the capillary tube 10 and the suction pipe 20 can be made of aluminum, or the capillary tube 10 can be made of copper and the suction pipe 20 can be made of aluminum or vice-versa.

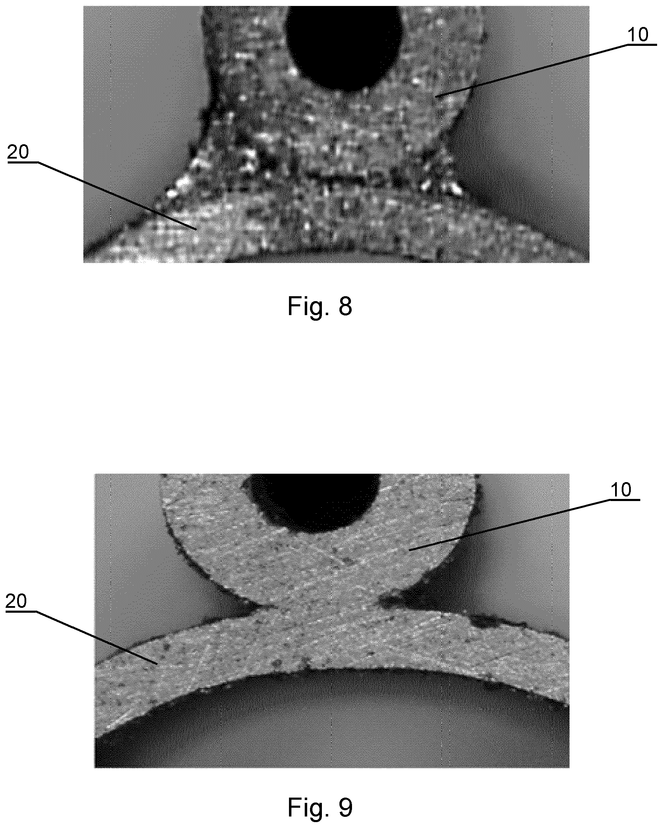

Fig. 8 shows a microscopic photo through a weld of the capillary tube and the suction pipe made by a conventional brazing process and Fig. 9 shows a microscopic photo through a laser weld of the capillary tube and the suction pipe made according to the present invention. The presented method for bonding the capillary tube 10 with the suction pipe 20 by laser welding provides significantly greater material uniformness of the weld (without holes or empty spaces therein) between the two elements of the regenerative exchanger, as compared to for example bonding by means of brazing or by means of multimode fiber laser. Despite the lower heat exchanger surface area (about 704 mm2/m) as compared to bonding by means of brazing (1580 mm2/m), the uniformity of the weld, performed by laser welding, allows to maintain comparable conditions of heat exchange between the capillary tube 10 and the suction pipe 20. Moreover the process of bonding by laser welding is significantly faster when compared to other known bonding methods for the capillary tube and the suction pipe.

The bonding by means of single mode fiber laser welding provides direct bonding of the bonded metals Cu-Cu without an intermediate layer on the base of Sn97Cu3 solder (Cu-Sn + Sn-Cu), which is present when bonding by brazing, wherein bonding the elements made of aluminum is very difficult in terms of maintaining constant process parameters and repeatability of the process.

The bonding of the capillary tube and the suction pipe by means of single mode fiber laser welding, wherein the elements are positioned by the special arrangement of rollers, results in only partial melting of the outer surfaces of these elements without their complete melting which could result in holes and leakages.

Furthermore, such arrangement allows to perform the welding process with a relatively high speed, namely up to 160 mm/s for aluminum and up to 130 mm/s for copper material.

## Claims

1. A method for bonding a capillary tube (10) and a suction pipe (20) for a regenerative heat exchanger, comprising the following steps:
- positioning the capillary tube (10) and the suction pipe (20) in an alignment adjacent to each other;
- feeding the capillary tube (10) positioned adjacent to the suction pipe (20) between at least one input pair of rollers that comprises a capillary tube roller (30) and a suction pipe roller (40), wherein the rollers (30, 40) press the capillary tube (10) and the suction pipe (20) towards each other;
- bonding the capillary tube (10) with the suction pipe (20) by means of a fiber laser welding head (60) by directing a laser beam towards a welding position wherein an outer surface of the capillary tube (10) contacts an outer surface of the suction pipe (20) so that the outer surfaces are melted and bonded with each other;
**characterized by**:
- securing the capillary tube (10) positioned adjacent to the suction pipe (20) between a holding roller arrangement that comprises one suction pipe roller (40) and two positioning rollers (51, 52) arranged opposite the suction pipe roller (40) at sides of the suction piper roller (40), and wherein the centers of the positioning rollers (51, 52) are distanced (d) from each other by no more than 150% of a diameter of the positioning rollers (51, 52), wherein the suction pipe roller (40) is biased towards the positioning rollers (51, 52), wherein the positioning rollers (51, 52) have a semicircular circumferential groove (53) of a radius (r) corresponding to the radius (r) of the capillary tube (10) and in which the capillary tube (10) is accommodated, and wherein the suction pipe roller (40) is biased towards the two positioning rollers (51, 52) such as to press the suction pipe (20) towards the capillary tube (10), and wherein the welding position of the laser beam is located in a central position between the positioning rollers (51, 52); and
- wherein the fiber laser welding head (60) is a single mode laser having a spot diameter between 10 and 50 micrometers, wherein the laser beam is directed perpendicularly with respect to a surface passing through longitudinal axes of the capillary tube (10) and the suction pipe (20).

2. The method according to claim 1, wherein a wave length of the laser beam is equal to 1070 nm.

3. The method according to any of previous claims, wherein the suction pipe (20) has a wall of a thickness (H) from 0.3 to 1.00 mm and the capillary tube (10) has a wall of a thickness (h) from 0.5 to 0.8 mm.

4. The method according to any of previous claims, wherein the radius (R) of the suction pipe (20) is from 2.0 to 5.0 mm and the radius (r) of the capillary tube (10) is from 0.9 to 1.6 mm.

5. The method according to any of previous claims, wherein the laser welding head (60) generates a laser beam having an output power from 100 to 2000 W.

6. The method according to any of previous claims, wherein both the capillary tube (10) and the suction pipe (20) are made of copper.

7. The method according to any of claims 1-5, wherein both the capillary tube (10) and the suction pipe (20) are made of aluminum.

8. The method according to any of claims 1-5, wherein the capillary tube (10) is made of copper and the suction pipe (20) is made of aluminum.

9. The method according to any of claims 1-5, wherein the capillary tube (10) is made of aluminum and the suction pipe (20) is made of copper.

10. The method according to any of previous claims, wherein the rollers (30, 40, 51, 52) are made of steel.

11. The method according to any of previous claims, wherein the centers of the positioning rollers (51, 52) are distanced (d) from each other by no more than 140%, or no more than 130%, or no more than 120%, or no more than 110%, or no more than 105%, or no more than 101% of a diameter of the positioning rollers (51, 52).

12. The method according to any of previous claims, wherein each of the positioning rollers (51, 52) has a diameter not larger than 40% of the diameter of the suction pipe roller (40).

13. The method according to any of previous claims, wherein the distance (d) between the positioning rollers (51, 52) plus the diameter of the positioning roller (51, 52) is not larger than the diameter of the suction pipe roller (40).

14. The method according to any of previous claims, wherein the capillary tube roller (30) has a first semicircular circumferential groove (31) of a radius (R) corresponding to the radius (R) of the suction pipe (20) and a second semicircular circumferential groove (32) formed at the bottom of the first groove (31) of a radius (r) corresponding to the radius (r) of the capillary tube (10) and a depth of twice the radius (r) of the capillary tube (10) and wherein the suction pipe roller (40) has a semicircular circumferential groove (41) of a radius (R) corresponding to the radius (R) of the suction pipe (20).

15. An apparatus for bonding a capillary tube (10) and a suction pipe (20) for a regenerative heat exchanger, comprising:
- an input pair of rollers that comprises a capillary tube roller (30) and a suction pipe roller (40), configured to receive between them the capillary tube (10) positioned adjacent to the suction pipe (20) and to press the capillary tube (10) and the suction pipe (20) towards each other;
- a fiber laser welding head (60) configured to direct a laser beam towards a welding position to bond the capillary tube (10) with the suction pipe (20) when the capillary tube (10) and the suction pipe (20) are arranged such that the capillary tube (10) contacts an outer surface of the suction pipe (20) so that the outer surfaces can be melted and bonded with each other;
**characterized by**:
- a holding roller arrangement configured to secure the capillary tube (10) positioned adjacent to the suction pipe (20), wherein the holding roller arrangement comprises one suction pipe roller (40) and two positioning rollers (51, 52) arranged opposite the suction pipe roller (40) at sides of the suction piper roller (40), and wherein the centers of the positioning rollers (51, 52) are distanced (d) from each other by no more than 150% of a diameter of the positioning rollers (51, 52), wherein the suction pipe roller (40) is biased towards the positioning rollers (51, 52), wherein the positioning rollers (51, 52) have a semicircular circumferential groove (53) of a radius (r) corresponding to the radius (r) of the capillary tube (10) and in which the capillary tube (10) is accommodated, and wherein the suction pipe roller (40) is biased towards the two positioning rollers (51, 52) such as to press the suction pipe (20) towards the capillary tube (10), and wherein the welding position of the laser beam is located in a central position between the positioning rollers (51, 52); and
- wherein the fiber laser welding head (60) is a single mode laser having a spot diameter between 10 and 50 micrometers, wherein the laser beam is configured to be directed perpendicularly with respect to a surface passing through longitudinal axes of the capillary tube (10) and the suction pipe (20).

## Patentansprüche

1. Verfahren zum Verbinden eines Kapillarrohrs (10) und eines Saugrohrs (20) für einen regenerativen Wärmetauscher, umfassend die folgenden Schritte:
- Positionieren des Kapillarrohrs (10) und des Saugrohrs (20) in einer Ausrichtung nebeneinander;
- Zuführen des Kapillarrohrs (10), das neben dem Saugrohr (20) positioniert ist, zwischen mindestens einem Eingangsrollenpaar, das eine Kapillarrohrrolle (30) und eine Saugrohrrolle (40) umfasst, wobei die Rollen (30, 40) das Kapillarrohr (10) und das Saugrohr (20) gegeneinander drücken;
- Verbinden des Kapillarrohrs (10) mit dem Saugrohr (20) mittels eines Faserlaser-Schweißkopfs (60) durch Richten eines Laserstrahls auf eine Schweißposition, wobei eine Außenfläche des Kapillarrohrs (10) mit einer Außenfläche des Saugrohrs (20) in Kontakt ist, so dass die Außenflächen geschmolzen und miteinander verbunden werden,
**gekennzeichnet durch**:
- Befestigen des Kapillarrohrs (10), das neben dem Saugrohr (20) positioniert ist, zwischen einer Halterollenanordnung, die eine Saugrohrrolle (40) und zwei Positionierungsrollen (51, 52) umfasst, die gegenüber der Saugrohrrolle (40) an Seiten der Saugrohrrolle (40) angeordnet sind, und wobei die Mittelpunkte der Positionierungsrollen (51, 52) um höchstens 150 % eines Durchmessers der Positionierungsrollen (51, 52) voneinander beabstandet (d) sind, wobei die Saugrohrrolle (40) gegen die Positionierungsrollen (51, 52) vorgespannt ist, wobei die Positionierungsrollen (51, 52) eine halbkreisförmige Umfangsnut (53) mit einem Radius (r) aufweisen, der dem Radius (r) des Kapillarrohrs (10) entspricht und in dem das Kapillarrohr (10) untergebracht ist, und wobei die Saugrohrrolle (40) gegen die beiden Positionierungsrollen (51, 52) vorgespannt ist, um das Saugrohr (20) gegen das Kapillarrohr (10) zu drücken, und wobei sich die Schweißposition des Laserstrahls in einer mittigen Position zwischen den Positionierungsrollen (51, 52) befindet, und
- wobei der Faserlaser-Schweißkopf (60) ein Singlemode-Laser mit einem Punktdurchmesser zwischen 10 und 50 Mikrometer ist, wobei der Laserstrahl senkrecht zu einer durch die Längsachsen des Kapillarrohrs (10) und des Saugrohrs (20) verlaufenden Fläche gerichtet ist.

2. Verfahren nach Anspruch 1, wobei eine Wellenlänge des Laserstrahls gleich 1070 nm ist.

3. Verfahren nach einem der vorhergehenden Ansprüche, wobei das Saugrohr (20) eine Wandstärke (H) von 0,3 bis 1,00 mm und das Kapillarrohr (10) eine Wandstärke (h) von 0,5 bis 0,8 mm aufweist.

4. Verfahren nach einem der vorhergehenden Ansprüche, wobei der Radius (R) des Saugrohrs (20) 2,0 bis 5,0 mm und der Radius (r) des Kapillarrohrs (10) 0,9 bis 1,6 mm beträgt.

5. Verfahren nach einem der vorhergehenden Ansprüche, wobei der Laserschweißkopf (60) einen Laserstrahl mit einer Ausgangsleistung von 100 bis 2000 W erzeugt.

6. Verfahren nach einem der vorhergehenden Ansprüche, wobei sowohl das Kapillarrohr (10) als auch das Saugrohr (20) aus Kupfer hergestellt sind.

7. Verfahren nach einem der Ansprüche 1 bis 5, wobei sowohl das Kapillarrohr (10) als auch das Saugrohr (20) aus Aluminium hergestellt sind.

8. Verfahren nach einem der Ansprüche 1 bis 5, wobei das Kapillarrohr (10) aus Kupfer hergestellt ist und das Saugrohr (20) aus Aluminium hergestellt ist.

9. Verfahren nach einem der Ansprüche 1 bis 5, wobei das Kapillarrohr (10) aus Aluminium hergestellt ist und das Saugrohr (20) aus Kupfer hergestellt ist.

10. Verfahren nach einem der vorhergehenden Ansprüche, wobei die Rollen (30, 40, 51, 52) aus Stahl hergestellt sind.

11. Verfahren nach einem der vorhergehenden Ansprüche, wobei die Mittelpunkte der Positionierungsrollen (51, 52) um höchstens 140 % oder höchstens 130 % oder höchstens 120 % oder höchstens 110 % oder höchstens 105 % oder höchstens 101 % eines Durchmessers der Positionierungsrollen (51, 52) voneinander beabstandet (d) sind.

12. Verfahren nach einem der vorhergehenden Ansprüche, wobei jede der Positionierungsrollen (51, 52) einen Durchmesser hat, der nicht größer als 40 % des Durchmessers der Saugrohrrolle (40) ist.

13. Verfahren nach einem der vorhergehenden Ansprüche, wobei der Abstand (d) zwischen den Positionierungsrollen (51, 52) plus der Durchmesser der Positionierungsrolle (51, 52) nicht größer als der Durchmesser der Saugrohrrolle (40) ist.

14. Verfahren nach einem der vorhergehenden Ansprüche, wobei die Kapillarrohrrolle (30) eine erste halbkreisförmige Umfangsnut (31) mit einem Radius (R), der dem Radius (R) des Saugrohrs (20) entspricht, und eine zweite halbkreisförmige Umfangsnut (32) aufweist, die am Boden der ersten Nut (31) mit einem Radius (r), der dem Radius (r) des Kapillarrohrs (10) entspricht, und einer Tiefe des doppelten Radius (r) des Kapillarrohrs (10) ausgebildet ist, und wobei die Saugrohrrolle (40) eine halbkreisförmige Umfangsnut (41) mit einem Radius (R) aufweist, der dem Radius (R) des Saugrohrs (20) entspricht.

15. Vorrichtung zum Verbinden eines Kapillarrohrs (10) und eines Saugrohrs (20) für einen regenerativen Wärmetauscher, umfassend:
- ein Eingangsrollenpaar, das eine Kapillarrohrrolle (30) und eine Saugrohrrolle (40) umfasst, die so eingerichtet sind, dass sie das Kapillarrohr (10), das neben dem Saugrohr (20) positioniert ist, zwischen sich aufnehmen und das Kapillarrohr (10) und das Saugrohr (20) gegeneinander drücken;
- einen Faserlaser-Schweißkopf (60), der so eingerichtet ist, dass er einen Laserstrahl auf eine Schweißposition richtet, um das Kapillarrohr (10) mit dem Saugrohr (20) zu verbinden, wenn das Kapillarrohr (10) und das Saugrohr (20) so angeordnet sind, dass das Kapillarrohr (10) mit einer Außenfläche des Saugrohrs (20) in Kontakt steht, so dass die Außenflächen geschmolzen und miteinander verbunden werden können;
**gekennzeichnet durch**:
- eine Halterollenanordnung, die so eingerichtet ist, dass sie das neben dem Saugrohr (20) positionierte Kapillarrohr (10) sichert, wobei die Halterollenanordnung eine Saugrohrrolle (40) und zwei der Saugrohrrolle (40) gegenüberliegende, an Seiten der Saugrohrrolle (40) angeordnete Positionierungsrollen (51, 52) umfasst, und wobei die Mittelpunkte der Positionierungsrollen (51, 52) um höchstens 150 % eines Durchmessers der Positionierungsrollen (51, 52) voneinander beabstandet (d) sind, wobei die Saugrohrrolle (40) gegen die Positionierungsrollen (51, 52) vorgespannt ist, wobei die Positionierungsrollen (51, 52) eine halbkreisförmige Umfangsnut (53) mit einem Radius (r) aufweisen, der dem Radius (r) des Kapillarrohrs (10) entspricht und in dem das Kapillarrohr (10) untergebracht ist, und wobei die Saugrohrrolle (40) gegen die beiden Positionierungsrollen (51, 52) vorgespannt ist, um das Saugrohr (20) gegen das Kapillarrohr (10) zu drücken, und wobei sich die Schweißposition des Laserstrahls in einer mittigen Position zwischen den Positionierungsrollen (51, 52) befindet, und
- wobei der Faserlaser-Schweißkopf (60) ein Singlemode-Laser mit einem Punktdurchmesser zwischen 10 und 50 Mikrometer ist, wobei der Laserstrahl so eingerichtet ist, dass er senkrecht zu einer durch die Längsachsen des Kapillarrohrs (10) und des Saugrohrs (20) verlaufenden Fläche gerichtet ist.

## Revendications

1. Procédé permettant de lier un tube capillaire (10) et un tuyau d'aspiration (20) pour un échangeur de chaleur à régénération, comprenant les étapes suivantes :
- positionnement du tube capillaire (10) et du tuyau d'aspiration (20) dans un alignement adjacent l'un à l'autre ;
- apport du tube capillaire (10) positionné adjacent au tuyau d'aspiration (20) entre au moins une paire de rouleaux d'entrée qui comprend un rouleau de tube capillaire (30) et un rouleau de tuyau d'aspiration (40), lesdits rouleaux (30, 40) pressant le tube capillaire (10) et le tuyau d'aspiration (20) l'un vers l'autre ;
- liaison du tube capillaire (10) au tuyau d'aspiration (20) au moyen d'une tête laser à fibre de soudage (60) en dirigeant un faisceau laser vers une position de soudage, une surface externe du tube capillaire (10) entrant en contact avec une surface externe du tuyau d'aspiration (20) afin que les surfaces externes soient fondues et liées les unes aux autres ;
**caractérisé par** :
- la fixation du tube capillaire (10) positionné adjacent au tuyau d'aspiration (20) entre un agencement de rouleau de maintien qui comprend un rouleau de tuyau d'aspiration (40) et deux rouleaux de positionnement (51, 52) agencés à l'opposé du rouleau de tuyau d'aspiration (40) sur les côtés du rouleau de tuyau d'aspiration (40), et lesdits centres des rouleaux de positionnement (51, 52) étant distants l'un de l'autre d'une distance (d) inférieure ou égale à 150 % d'un diamètre des rouleaux de positionnement (51, 52), ledit rouleau de tuyau d'aspiration (40) étant sollicité vers les rouleaux de positionnement (51, 52), lesdits rouleaux de positionnement (51, 52) comportant une rainure circonférentielle semi-circulaire (53) d'un rayon (r) correspondant au rayon (r) du tube capillaire (10) et dans laquelle le tube capillaire (10) est logé, et ledit rouleau de tuyau d'aspiration (40) étant sollicité vers les deux rouleaux de positionnement (51, 52) de façon à presser le tuyau d'aspiration (20) vers le tube capillaire (10), et ladite position de soudage du faisceau laser étant située dans une position centrale entre les rouleaux de positionnement (51, 52) ; et
- ladite tête laser à fibre de soudage (60) étant un laser monomode comportant un diamètre de spot compris entre 10 et 50 micromètres, ledit faisceau laser étant dirigé perpendiculairement par rapport à une surface passant par les axes longitudinaux du tube capillaire (10) et du tuyau d'aspiration (20).

2. Procédé selon la revendication 1, une longueur d'onde du faisceau laser étant égale à 1070 nm.

3. Procédé selon l'une quelconque des revendications précédentes, ledit tuyau d'aspiration (20) comportant une paroi d'une épaisseur (H) de 0,3 à 1,00 mm et ledit tube capillaire (10) comportant une paroi d'une épaisseur (h) allant de 0,5 à 0,8 mm.

4. Procédé selon l'une quelconque des revendications précédentes, ledit rayon (R) du tuyau d'aspiration (20) allant de 2,0 à 5,0 mm et ledit rayon (r) du tube capillaire (10) allant de 0,9 à 1,6 mm.

5. Procédé selon l'une quelconque des revendications précédentes, ladite tête laser de soudage (60) générant un faisceau laser comportant une puissance de sortie allant de 100 à 2000 W.

6. Procédé selon l'une quelconque des revendications précédentes, à la fois ledit tube capillaire (10) et ledit tuyau d'aspiration (20) étant constitués de cuivre.

7. Procédé selon l'une quelconque des revendications 1-5, à la fois ledit tube capillaire (10) et ledit tuyau d'aspiration (20) étant constitués d'aluminium.

8. Procédé selon l'une quelconque des revendications 1-5, ledit tube capillaire (10) étant constitué de en cuivre et ledit tuyau d'aspiration (20) étant constitué d'aluminium.

9. Procédé selon l'une quelconque des revendications 1-5, ledit tube capillaire (10) étant constitué d'aluminium et ledit tuyau d'aspiration (20) est constitué de cuivre.

10. Procédé selon l'une quelconque des revendications précédentes, lesdits rouleaux (30, 40, 51, 52) étant constitués d'acier.

11. Procédé selon l'une quelconque des revendications précédentes, lesdits centres des rouleaux de positionnement (51, 52) étant distants l'un de l'autre d'une distance (d) inférieure ou égale à 140 %, ou inférieure ou égale à 130 %, ou inférieure ou égale à 120 %, ou inférieure ou égale à 110 %, ou inférieure ou égale à 105 %, ou inférieure ou égale à 101 % d'un diamètre des rouleaux de positionnement (51, 52).

12. Procédé selon l'une quelconque des revendications précédentes, chacun des rouleaux de positionnement (51, 52) comportant un diamètre non supérieur à 40 % du diamètre du rouleau de tuyau d'aspiration (40).

13. Procédé selon l'une quelconque des revendications précédentes, ladite distance (d) entre les rouleaux de positionnement (51, 52) plus le diamètre du rouleau de positionnement (51, 52) n'étant pas supérieure au diamètre du rouleau de tuyau d'aspiration (40).

14. Procédé selon l'une quelconque des revendications précédentes, ledit rouleau de tube capillaire (30) comportant une première rainure circonférentielle semi-circulaire (31) d'un rayon (R) correspondant au rayon (R) du tuyau d'aspiration (20) et une seconde rainure circonférentielle semi-circulaire (32) formée au fond de la première rainure (31) d'un rayon (r) correspondant au rayon (r) du tube capillaire (10) et d'une profondeur de deux fois le rayon (r) du tube capillaire (10) et ledit rouleau de tuyau d'aspiration (40) comportant une rainure circonférentielle semi-circulaire (41) d'un rayon (R) correspondant au rayon (R) du tuyau d'aspiration (20).

15. Appareil destiné à lier un tube capillaire (10) et un tuyau d'aspiration (20) pour un échangeur de chaleur à régénération, comprenant :
- une paire de rouleaux d'entrée qui comprend un rouleau de tube capillaire (30) et un rouleau de tuyau d'aspiration (40), conçus pour recevoir entre eux le tube capillaire (10) positionné adjacent au tuyau d'aspiration (20) et pour presser le tube capillaire (10) et le tuyau d'aspiration (20) l'un vers l'autre ;
- une tête laser à fibre de soudage (60) conçue pour diriger un faisceau laser vers une position de soudage afin de lier le tube capillaire (10) au tuyau d'aspiration (20) lorsque le tube capillaire (10) et le tuyau d'aspiration (20) sont agencés de sorte en ce que le tube capillaire (10) entre en contact avec une surface externe du tuyau d'aspiration (20) de sorte que les surfaces externes puissent être fondues et liées les unes aux autres ;
**caractérisé par** :
- un agencement de rouleau de maintien conçu pour fixer le tube capillaire (10) positionné adjacent au tuyau d'aspiration (20), ledit agencement de rouleau de maintien comprenant un rouleau de tuyau d'aspiration (40) et deux rouleaux de positionnement (51, 52) agencés à l'opposé du rouleau de tuyau d'aspiration (40) sur les côtés du rouleau de tuyau d'aspiration (40), et lesdits centres des rouleaux de positionnement (51, 52) étant distants l'un de l'autre d'une distance (d) inférieure ou égale à 150 % d'un diamètre des rouleaux de positionnement (51, 52), ledit rouleau de tuyau d'aspiration (40) étant sollicité vers les rouleaux de positionnement (51, 52), lesdits rouleaux de positionnement (51, 52) comportant une rainure circonférentielle semi-circulaire (53) d'un rayon (r) correspondant au rayon (r) du tube capillaire (10) et dans lequel le tube capillaire (10) est logé, et ledit rouleau de tuyau d'aspiration (40) étant sollicité vers les deux rouleaux de positionnement (51, 52) de façon à presser le tuyau d'aspiration (20) vers le tube capillaire (10), et ladite position de soudage du faisceau laser étant située dans une position centrale entre les rouleaux de positionnement (51, 52) ;
et
- ladite tête laser à fibre de soudage (60) étant un laser monomode comportant un diamètre de spot compris entre 10 et 50 micromètres, ledit faisceau laser étant conçu pour être dirigé perpendiculairement par rapport à une surface passant par des axes longitudinaux du tube capillaire (10) et du tuyau d'aspiration (20).
